# EUROPEAN PATENT APPLICATION

(11) **EP 4 834 464 A1**
(43) Date of publication of application: **04.11.2026**
(21) Application number: 25173051.1
(22) Date of filing: 28.04.2025
(51) Int. Cl.: B01D 61/02, B01D 61/06, B01D 61/10, C02F 1/44

(54) **SYSTEM FOR REVERSE OSMOSIS**

(71) Applicant: Danfoss A/S, 6430 Nordborg (DK)
(72) Inventor: Enevoldsen, Georg Herborg, 6900 Skjern (DK)
(74) Representative: Gulde & Partner

(57) **Abstract**

The present invention relates to a system for multi-stage reverse osmosis, RO, comprising a first RO stage (10) with a first feed inlet (11), a first brine outlet (12), and a first permeate outlet (13); a second RO stage (20) with a second feed inlet (21), a second brine outlet (22), and a second permeate outlet (23); and a pressure exchanger, PE, (40) connected between the second brine outlet (22) and the first feed inlet (11), wherein a first pressure difference Δp₁ between the first brine outlet (12) and the second feed inlet (21) corresponds to a second pressure difference Δp₂ between the second brine outlet (22) and the pressure exchanger (40). The invention allows to shut-off the second stage of the RO system in order to adapt to external circumstances such as fluctuations of energy prices and or saline concentrations. The invention further relates to a method for operating such a system for reverse osmosis (100).

## Description

### Field of the Invention

The invention relates to a system for reverse osmosis, particularly to system for a multi-stage reverse osmosis having an improved energy efficiency. The invention further relates to a method for the operation of such a system, exemplarily for producing fresh water. The invention allows to adapt to different energy prices and/or concentrations of dissolved salts.

### Technological Background

Osmosis is a process wherein a solvent moves across a semipermeable membrane from the membrane's side facing a lower solute concentration towards the membrane's side facing a higher solute concentration. Therein, the movement of the solvent particles is driven by diffusion and, overall, more solvent particles diffuse towards the higher solute concentration, i.e., the lower water potential, resulting in a net movement of the solvent. This naturally occurring process is also underlying the reverse osmosis process as described below.

In reverse osmosis, a pressure exceeding the osmotic pressure is applied to the side of the higher solute concentration thus reverting the energy balance of the osmotic system causing an overall net diffusion movement from the high solute to the low solute concentration across the membrane, thus increasing solute concentration at the pressurized membrane side. Reverse osmosis systems comprise at least two chambers that are separated by a semipermeable membrane, wherein inflow and outflow of said chambers can be controlled for setting volumetric flow conditions as well as the pressure gradient across the membrane.

Reverse osmosis, RO, is frequently applied for water purification or desalination applications where it yields a highly concentrated brine next to the purified and/or desalinated water. The brine remains at the pressurized side of the membrane, whereas the purified and/or desalinated water (permeate) is removed from the other membrane side at a low pressure. The pressurized brine is removed from the reverse osmosis chamber in order to avoid an excessive increase in osmotic pressure and to allow for inflow of the fresh feed solution into the chamber. It is further known to use energy recovery devices, such as hydraulic turbines, for the purpose of transferring hydraulic energy from the pressured brine to the feed solution in order to improve the overall energy efficiency of the reverse osmosis process.

It is also known to combine multiple RO stages for improving energy efficiency and freshwater yield in such a system. In such multi-stage RO systems, the RO chambers are usually combined in a linear manner. Therein, the brine is usually pressurized before entering a subsequent stage in order to compensate for the increased solute concentration of the brine. Hydraulic turbines are also used in multi-stage RO systems for energy recovery and improved efficiency.

The use of turbines usually requires conversion of hydraulic energy to mechanical energy in the motor side as well as conversion to electrical energy for energy transmission. At the pump side, back conversion from electrical energy to mechanical energy and further to hydraulic energy is then required. This usually reduces the overall energy efficiency of a RO system. Pressure exchangers that allow for a direct energy transfer between liquid flows avoid such conversion losses but have rather narrow windows of optimal transfer efficiency, which are often not met in RO systems.

EP 4 342 573 A1 discloses a favorable multi-stage RO-system in which the brine outlet of the first stage RO stage is further pressurized by a further pressure pump and fed to a second RO stage. The principle can be extended accordingly by adding further stages.

However, one limitation of the RO system according to EP 4 342 573 A1 is that all brine from the outlet of one stage needs to completely enter the next stage, thus linking the membrane cross-flow between the two stages. In order to do so all brine from the outlet of (e.g.) the first stage typically need to be further pressurized as the pressure of a subsequent stage typically needs to be significantly higher than the previous stage due to the higher solute concentration. Despite all attempts to recover as much energy as possible, one would sometimes wish for a possibility to reduce the energy consumption in particular in times when energy prices do increase. Furthermore, it would be desirable to adapt to different saline concentrations, to different water temperatures, to different degrees of wear of components in the RO system and even to different membrane types.

It is thus an object of the present disclosure to overcome or at least reduce the drawbacks of the prior art and to provide a multi-stage system for reverse osmosis with an adaptable energy efficiency.

### Summary of Invention

The objective of the disclosure is solved and the disadvantages of the prior art are overcome or at least reduced by the subject-matter of the present invention, i.e., by system for reverse osmosis, RO, according to the appended claims and by a method for operating such system. The current multi-stage RO system is characterized by a short-cut connection between subsequent stages which allows the system to better adapt to external factors such as energy prizes, fresh-water needs, saline concentrations and cross-flow requirements.

A first aspect of the present disclosure relates to a system for reverse osmosis, RO, comprising a first RO stage with a first feed inlet, a first brine outlet, and a first permeate outlet. The first RO stage comprises a first high-pressure RO chamber and a first low-pressure RO chamber that are separated by a first RO membrane. These chambers preferably form a RO tank that is configured to house the first RO process and to withstand the occurring pressures. The first RO stage may comprise more inlets and/or outlets, such as multiple first feed inlets, multiple first brine outlets and/or multiple first permeate outlets. For the sake of conciseness, following it is only referred to one of these inlet and outlets, respectively. In a first RO stage comprising multiple inlets and/or outlets the following explanations can refer to relations between individual inlets and/or outlets and/or to relations between multiple of inlets and/or outlets. Such a system has been disclosed in EP 4 342 573 A1.

The (at least one) first feed inlet is configured to supply a feed solution flow to the first high-pressure RO chamber and the (at least one) first brine outlet is configured to discharge the brine solution from said chamber. The first low-pressure RO chamber is configured to receive a permeate, i.e., the feed solution with reduced solute concentration, via the first RO membrane. The (at least one) first permeate outlet is configured to discharge the permeate from the first low-pressure RO chamber. The up-concentrated feed solution (brine) is discharged via the (at least one) first brine outlet at a pressure that is about the same as the pressure of the feed solution at the (at least one) first feed inlet. The permeate is discharged via the (at least one) first permeate outlet at a pressure significantly lower than the feed pressure, preferably as low as possible for having an optimal pressure difference at the membrane.

The first RO membrane is configured for allowing the diffusion of the solvent of the feed solution under an external pressure applied to the first high-pressure RO chamber. In a preferred embodiment the feed solution is salt water, e.g., sea water, and the first RO membrane is configured to allow water to diffuse through the membrane while not letting salt ions, such as Na⁺ and Cl⁻, pass through the membrane. Preferably, the first RO membrane is configured to not let organics, bacteria, and pyrogens pass through the membrane, however such components may already be removed in a pre-treatment stage prior the RO chamber. The first RO membrane preferably is one of a cellulose acetate, CA, membrane, or a polysulfone membrane which may be coated with aromatic polyamids. Also preferred, the first RO membrane is nano-structured, a zeolithe membrane, and/or a spiral wound RO membrane.

The RO system of the present disclosure further comprises a second RO stage with a second feed inlet, a second brine outlet, and a second permeate outlet. The second RO stage comprises a second high-pressure RO chamber and a second low-pressure RO chamber that are separated by a second RO membrane. These chambers preferably form a second RO tank that is configured to house the second RO process and to withstand the occurring pressures. The second RO stage may comprise more inlets and/or outlets, such as multiple second feed inlets, multiple second brine outlets and/or multiple second permeate outlets. For the sake of conciseness, following it is only referred to one of such inlet and outlets, respectively. In a second RO stage comprising multiple inlets and/or outlets the following explanations can refer to relations between individual inlets and/or outlets and/or to relations between multiple of inlets and/or outlets.

The (at least one) second feed inlet is configured to supply a feed solution flow to the second high-pressure RO chamber and the (at least one) second brine outlet is configured to discharge the brine solution from said second chamber. Therein, the feed solution fed to the (at least one) second feed inlet is (at least partially) the brine solution discharged from the (at least one) first brine outlet. The second low-pressure RO chamber is configured to receive a permeate via the second RO membrane. The (at least one) second permeate outlet is configured to discharge the permeate form the second low-pressure RO chamber. The permeate from the first and second low-pressure chamber may be commonly discharged. Sometimes the two permeate outlet are kept separate. Sometimes only one of the permeates are of low enough salt content to be potable. Sometimes the second stage is configured to desalinate the feed only to the salinity level of the concentration to the first feed inlet. This second permeate outlet may then be connected to the inlet side of the first high pressure pump.

Also in the second RO stage, the brine is discharged via the (at least one) second brine outlet at a pressure that is about the same as the pressure of the feed solution (first stage brine) at the (at least one) second feed inlet, while the permeate is discharged via the (at least one) second permeate outlet at a lower pressure, preferably at a pressure significantly lower than the feed pressure, even as low as possible. The second RO membrane is configured in same or similar manner as the first RO membrane.

The system of the present disclosure further comprises a pressure exchanger, PE, that is connected between the second brine outlet and the first feed inlet. In other words, the pressure exchanger comprises an inlet, particularly a high-pressure, HP, inlet, that is configured to receive a brine flow discharged from the second brine outlet and an outlet, particularly a high-pressure, HP, outlet, that is configured to provide a feed solution flow to the first feed inlet. The pressure exchanger further comprises another outlet, particularly a low-pressure, LP, outlet, that is configured to discharge the depressurized brine flow and another inlet, particularly a low-pressure, LP, inlet, that is configured to receive a feed solution flow to be pressurized.

In the system of the present disclosure, a first pressure difference Δp₁ between the first brine outlet and the second feed inlet corresponds to a second pressure difference Δp₂ between the second brine outlet and the pressure exchanger. In other words, the first pressure difference Δp₁ relates to a difference between the pressure of the brine solution discharged via the first brine outlet and the pressure of the feed solution entering the second RO stage via the second feed inlet. Therein, the feed solution entering the second RO stage via the second feed inlet consists at least partially, preferably completely from the brine solution discharged via the first brine outlet. Hence, the first and second pressure differences Δp₁ and Δp₂ are not independent of each other but rather correspond to each other in that the first pressure difference Δp₁ is set to a value depending on a value of the second pressure differences Δp₂ or the second pressure differences Δp₂ is set to a value depending on a value of the first pressure differences Δp₁.

Particularly, the system of the present disclosure, comprises a first means for creating the first pressure difference, the first means being disposed between the first brine outlet and the second feed inlet and a second means for creating the second pressure difference, the second means being disposed between the second brine outlet and the pressure exchanger. The system of the present disclosure further comprises a control unit for controlling the first means for creating the first pressure difference and the second means for creating the second pressure difference. The control unit is configured to control the first means and the second means in order to set the first pressure difference and the second pressure difference correspondingly to each other. Particularly, the control unit is configured to set the value of the first pressure difference Δp₁ depending on a value of the second pressure differences Δp₂ or to set the value of the second pressure differences Δp₂ depending on a value of the first pressure differences Δp₁. Further preferred, the control unit is configured to control the first and second pressure difference such that the first pressure difference and the second pressure difference automatically adjust with respect to each other such that they match each other.

When the first means is preferably one of a hydraulic pump and a hydraulic motor and the second means is then preferably the other one of the hydraulic pump and the hydraulic motor. Each of the first and second means can also be one of a High-Pressure Pump, an Inter Stage Booster Pump, a Turbine and an isobaric pressure exchanger in connection with a high pressure booster pump (preferably realized with the Danfoss iSave pump which offers a combination of isobaric pressure exchanger in connection with a high pressure booster pump), as long as the aforementioned correspondence is ensured.

The system of the present disclosure thus enables an operation, wherein a pressure between the first brine outlet and the second feed inlet is changed by the first pressure difference Δp₁ and a pressure between the second brine outlet and the pressure exchanger is changed by the second pressure difference Δp₂ corresponding to the first pressure difference Δp₁ and wherein hydraulic energy is thus advantageously transferred from a second brine flow effluent from the second brine outlet to a first feed flow provided to the first feed inlet via the pressure exchanger with an improved efficiency. The improved efficiency is enabled by the pressure configuration, i.e., corresponding first and second pressure differences, of the disclosed system that allows the operation of the pressure exchanger with an optimal transfer efficiency. According to the present disclosure, the first pressure difference Δp₁ and/or the second pressure differences Δp₂ can have a positive pressure value or a negative pressure value.

According to a preferred embodiment of the RO system, the pressure exchanger, PE, has a high-pressure, HP inlet that is connected to the second brine outlet and a PE HP outlet that is connected to the first feed inlet and the second pressure difference Δp₂ is occurring between the second brine outlet and the PE HP inlet. Thus, in the RO system of the present disclosure the second pressure difference Δp₂ is created before the brine flow is fed to the pressure exchanger in order to feed the brine flow to the pressure exchanger with an optimized pressure. In that way a transfer efficiency of hydraulic energy in the pressure exchanger that is configured to pressurize the feed flow that is provided to the first feed inlet is advantageously improved. Also advantageous in the embodiment is a booster pump upstream of the second brine outlet.

Further preferred, in the system of the present disclosure, the first pressure difference Δp₁ is utilized to create the second pressure difference Δp₂. In other words, hydraulic energy associated with the first pressure difference Δp₁ is harvested and utilized to the create second pressure difference Δp₂. Also preferred, the second pressure difference Δp₂ is utilized to create the first pressure difference Δp₁. Again, this essentially refers to a transfer of hydraulic energy associated with the first pressure difference Δp₁ and the second pressure difference Δp₂. Therein, creating the second pressure difference Δp₂ by utilizing the first pressure difference Δp₁ does not necessarily mean that energy is provided to create the second pressure difference Δp₂ but in a same manner the second pressure difference Δp₂ can be created by removing hydraulic energy from the system utilizing the first pressure difference Δp₁. The transfer of hydraulic energy related to the first pressure difference Δp₁ and the second pressure difference Δp₂ may occur directly or indirectly by conversion to other forms of energy. Exemplarily, hydraulic energy may be converted to mechanic and/or electric energy for being transferred between the first pressure difference Δp₁ and the second pressure difference Δp₂. Preferably, the first means for creating the first pressure difference and the second means for creating the second pressure difference are connected to each other via a connection that allows for energy transfer, either directly (e.g., mechanically) or indirectly (e.g., via conversion from hydraulic to electric energy and back-conversion from electric to hydraulic energy).

In a particularly preferred embodiment of the system of the present disclosure, the pressure exchanger is an isobaric pressure exchanger. Further preferred, the pressure exchanger is configured to transfer pressure from the pressurized brine flow downstream the second brine outlet to the low-pressure feed solution upstream the first feed inlet utilizing the principle of positive displacement. In such an isobaric pressure exchanger, pressure transfer occurs from a high-pressure (brine) flow to a low-pressure (feed) flow by putting these flows in direct, momentary contact. Such isobaric pressure exchanger is known to the skilled person and, in early forms are disclosed e.g., in US 2,675,173 B or EP0298097A1. A modern example of an isobaric pressure exchanger is the pressure exchanger within the Danfoss iSave device.

As explained in EP 4 342 573 A1 the energy efficiency of an isobaric pressure exchanger increases when the pressure differences in the pressure exchanger decreases. Particularly, an energy efficiency is the better, the less a pressure difference between a high-pressure inflow and a high-pressure outflow is. Further, the energy efficiency of the isobaric pressure exchanger is the better the less a pressure difference between a low-pressure inflow and a low-pressure outflow is. The system of the present disclosure advantageously reduces these pressure differences.

Preferably, the pressure exchanger is a rotary pressure exchanger, particularly preferred having a cylindrical rotor with longitudinal ducts oriented parallel to the rotational axis, as shown in EP 4 342 573 A1.

In a particularly preferred embodiment of the system of the present disclosure, a hydraulic motor is connected between the second brine outlet and the pressure exchanger high-pressure inlet. Further preferred, the hydraulic motor is an axial piston motor comprising a mechanical shaft that is connected either to a swash plate carrying a plurality of pistons arranged inside a cylinder block or directly to such cylinder block, as disclosed in EP 4 342 573 A1.

In this preferred embodiment, a pressure at the first brine outlet is preferably smaller than a pressure at the second feed inlet. Exemplarily, the first RO stage operates at a high-pressure level of about 60 bar, while the second RO stage operates at a high-pressure level of about 120 bar. As the pressure difference in the high-pressure RO chambers is neglectable, the pressure at the first brine outlet is about 60 bar, while the pressure at the second feed inlet is about 120 bar. Hence, the first pressure difference Δp₁ here is a pressure rise and thus the second pressure difference Δp₂ is a pressure drop. Particularly preferred, a hydraulic pump is interconnected between the first brine outlet and the second feed inlet for providing the pressure rise of the first pressure difference Δp₁ to brine flow upstream the second feed inlet. Further preferred, the hydraulic pump between the first brine outlet and the second feed inlet is powered (at least partially) by the hydraulic motor providing the pressure drop of the second pressure difference Δp₂ downstream the second brine outlet upstream the pressure exchanger.

In another particularly preferred embodiment, a hydraulic pump is connected between the second brine outlet and the pressure exchanger high-pressure inlet. The hydraulic pump preferably is an axial piston pump comprising a mechanical shaft that is either connected to a swash plate carrying a plurality of pistons arranged inside a cylinder block or directly to such cylinder block, as disclosed in EP 4 342 573 A1.

In this preferred embodiment, a pressure at the first brine outlet is preferably larger than a pressure at the second feed inlet. Exemplarily, the first RO stage operates at a high-pressure level of about 120 bar, while the second RO stage operates at a high-pressure level of about 60 bar. As the pressure difference in the high-pressure RO chambers is neglectable, the pressure at the first brine outlet is about 120 bar, while the pressure at the second feed inlet is about 60 bar. Hence, the first pressure difference Δp₁ here is a pressure drop, while the second pressure difference Δp₂ is a pressure rise. Preferably, a hydraulic motor is connected between the first brine outlet and the second feed inlet for providing the pressure drop as the first pressure difference Δp₁. Further preferred, the hydraulic motor between the first brine outlet and the second feed inlet is powering (at least partially) the hydraulic pump providing the pressure rise of the second pressure difference Δp₂ upstream the pressure exchanger.

In the system of the present disclosure and in each of the above described embodiments, the first pressure difference Δp₁ preferably is larger than 5 bar, preferably larger than 10 bar, further preferred larger than 15 bar, particularly preferred larger than 20 bar, also preferred larger than 30 bar, preferably larger than 40 bar and further preferred larger than 50 bar. In other words, the first RO stage and the second RO stage are preferably operated at high-pressure levels that are distinct ("far away") from each other. In the system of the present disclosure, a difference in high-pressure levels is present as the first pressure difference Δp₁ that corresponds to a second pressure difference Δp₂ which is introduced upstream to the pressure exchanger. By coupling the first pressure difference Δp₁ and the second pressure difference Δp₂, the energy efficiency of the system is increased by manipulating the pressure levels of the pressure exchanger without requiring external energy. Hence, the system of the present disclosure can be advantageously used, if there is a rather high or variable difference in high-pressure levels of a multi-stage RO system. A particularly advantageous method of coupling will be described in more detail below.

Preferably, in the system of the present disclosure the first pressure difference Δp₁ is about 70% to 130% of the second pressure difference Δp₂, also preferred the first pressure difference Δp₁ is about 80% to 120% of the second pressure difference Δp₂, further preferred the first pressure difference Δp₁ is about 90% to 110% of the second pressure difference Δp₂, and particularly preferred the first pressure difference Δp₁ is about 95% to 105% of the second pressure difference Δp₂. While it is particularly preferred that the first pressure difference Δp₁ has an equal amount as the second pressure difference Δp₂, some pressure losses occur in the high-pressure RO chambers of the first and second RO stage, the fluid conduits and other parts of the RO system. Thus, an equal amount of the first pressure difference Δp₁ and the second pressure difference Δp₂ might not be maintained in all operational states of the system. Preferably, the control unit controls the first means for creating the first pressure difference and the second means for creating the second pressure difference such that the abovementioned correspondence between the first and second pressure difference is realized.

However, neither the first pressure difference Δp₁ nor the second pressure difference Δp₂ may be a constant value. In any multi-stage RO system, there will be pressure losses occurring in the RO chambers, the PE unit and/or the pipes. Although one will strive to keep them as low as possible, it is not possible to deliberately set (i.e., control in a strict sense) the first pressure difference Δp₁ vis-à-vis the second pressure difference Δp₂ but these pressure differences are rather a consequence of the system design and the flow rate through it. However, in the system of the present disclosure, any change in pressure losses, e.g., due to increased flow rates, aging of membranes, or the like, the first pressure difference Δp₁ and/or the second pressure difference Δp₂ automatically adjust with respect to each other such that they match each other. Hence, a pressure at a HP inlet of the pressure exchanger always fits a HP outlet pressure with requiring a pressure addition in an additional booster with external energy. Hence, the system of the present disclosure advantageously provides a very flexible solution that can easily handle changes in flowrates or pressures in the system without any efficiency losses.

In a preferred embodiment of the system of the disclosure, the hydraulic motor interconnected between - one of - the first brine outlet and the second feed inlet or the second brine outlet and the PE HP inlet and the hydraulic pump interconnected between - the other one of - the first brine outlet and the second feed inlet or the second brine outlet and the PE HP inlet are mechanically connected to each other. This embodiment advantageously allows for a direct transfer of energy from the hydraulic motor to the hydraulic pump without any conversion losses, particularly without any losses due to conversion of mechanical energy to electrical energy and vice versa. Preferred embodiments of hydraulic motors are disclosed in EP 4 342 573 A1.

In such embodiment, the hydraulic energy provided by the hydraulic pump and/or the hydraulic energy consumed by the hydraulic motor may be adapted in order to match each other, thus allowing for a faultless direct mechanical connection. Exemplarily, a pressure drop at the hydraulic motor may be adjusted (e.g., lowered) in order to adapt (e.g., reduce) the hydraulic energy that is converted there into mechanical energy. In the same manner, a pressure rise at the hydraulic pump may be adjusted (e.g., increased) in order to match a mechanical energy provided via the common shaft. Such adaptions may be carried out using adjustable valves. The aforementioned components may thus realize the connection that is configured to allow for energy transfer between the first and second means for creating pressure differences.

Further preferred, the mechanical connection is an indirect mechanical connection, for example via a gear box, a transmission, and/or a clutch. In such embodiment, preferably an output shaft of the hydraulic motor is mechanically connected to an input shaft of the hydraulic pump via the gearbox, transmission, and/or a clutch, as explained in detail in EP 4 342 573 A1. The aforementioned components may thus realize the connection that is configured to allow for energy transfer between the first and second means for creating pressure differences.

The skilled person is aware of multiple designs for such an induction motor which are commonly used in various industrial applications, such as e.g., wind turbines. Exemplary designs, schematics and circuit diagrams are e.g., discloses in S. MÜLLER; S.; et al. (2002). "Doubly Fed Induction Generator Systems for Wind Turbines" (PDF). IEEE Industry Applications Magazine. IEEE. 8 (3): 26-33. doi:10.1109/2943.999610, as well as in Roberts, Paul C. (2004). "Study of Brushless Doubly-Fed (Induction) Machines; Contributions in Machine Analysis, Design and Control" (PDF). Emmanuel College, University of Cambridge. The whole content of the aforementioned documents is incorporated herein by reference.

According to this preferred embodiment, the rotor of the induction motor is mechanically connected to (an input shaft of) the hydraulic pump and is also mechanically connected to (an output shaft of) the hydraulic motor. In other words, also in this embodiment, an indirect mechanical connection exists between the hydraulic pump and the hydraulic motor. In the context of this application, an input/output shaft refers to any mechanical component (e.g., pinion) that is configured to convey mechanical energy that is input/output by a given device. The mechanical connection of the rotor to the hydraulic motor and/or the hydraulic pump is either a direct mechanical connection (e.g., via a common shaft of the induction motor) or an indirect mechanical connection (e.g., via a gearbox). Particularly preferred, the induction motor is a dual-shaft induction motor or double shaft induction motor, wherein the rotor is connected to two shafts, one of which is then preferably connected to the hydraulic motor and the other one to the hydraulic pump. In the system according to this embodiment, the hydraulic pump and the hydraulic motor are mechanically connected via the rotor of the induction motor. This again allows for a direct transfer of energy from the hydraulic motor to the hydraulic pump without conversion losses, particularly without losses due to electric power conversion in power converters, such as e.g., AC/DC, AC/AC or DC/DC converters or variable frequency drives. The aforementioned components may thus realize the connection that is configured to allow for energy transfer between the first and second means for creating pressure differences.

Further, the combination of hydraulic motor, induction motor and hydraulic pump can be (configured to be) operated with a net positive power production, wherein the produced power can be advantageously distributed and/or used to operate other electrical consumers in the system, e.g. feed pumps, etc. Further, the system's configuration allows for a simple compensation of energetic differences between the hydraulic motor and the hydraulic pump by adding or retrieving electric power to or from the system. Preferably, the induction motor can be operated with a variable slip, wherein a positive slip corresponds to an operation mode in which energy is consumed by the induction motor, e.g., in order to compensate for pressure losses, and wherein a negative slip corresponds to an operation mode in which electric energy is generated by the induction motor, i.e., in which the induction motor functions as generator. The aforementioned components may thus realize the connection that is configured to allow for energy transfer between the first and second means for creating pressure differences.

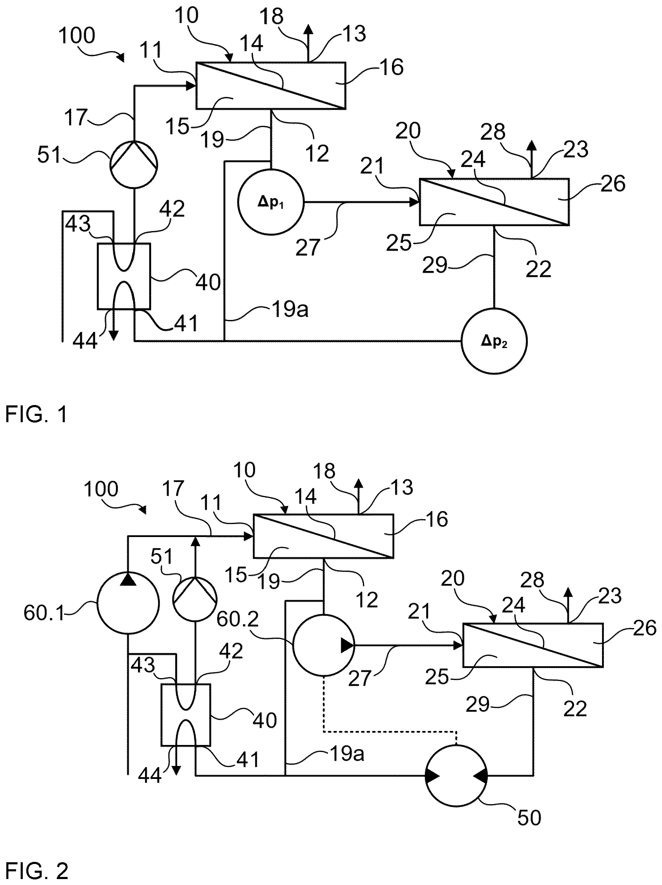

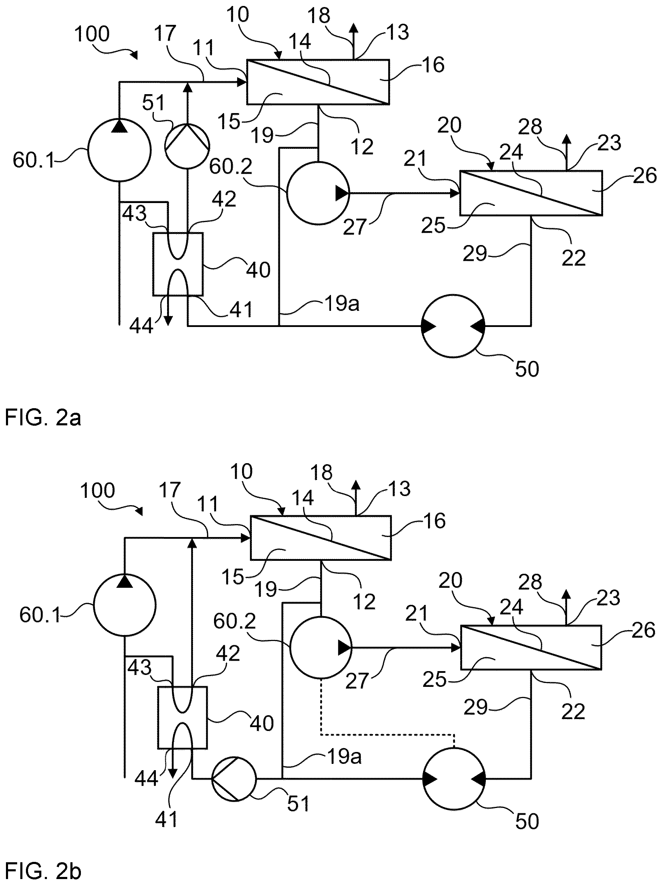

In contrast to the RO system described in EP 4 342 573 A1 the current system comprises a fluid connection between the line connecting the first brine outlet with the second hydraulic pump and the line connecting the hydraulic motor and the pressure exchanger PE high pressure inlet (see Figure 2a). This additional fluid connection does not require any valves or throttles. The additional fluid connection creates a shortcut of the second brine outlet stage and the first brine outlet stage. This enables several interesting modes of operation. If the system is working as described above by e.g. creating a high-pressure level of about 60 bar at the first RO stage 10 and by creating a high-pressure level of about 120 bar and the setpoint of the interstage booster pump is adjusted so that it drive the same amount of flow through it, as exits the first brine outlet, the result is the same as without the additional fluid connection. The second hydraulic pump will pump all brine coming from the first brine outlet into the second RO chamber. However, if the second hydraulic pump and the turbine are switched off then the brine from the first brine outlet will flow through the additional line straight into the pressure exchanger, similar to standard single stage RO operation. In such operation mode the entire system consumes significantly less energy. One can also set the operation point of the interstage booster pump to pump only half the flow that exits the first stage brine outlet. In this way one can achieve a scenario in-between the first two modes of operation, illustrating the flexibility of operation of this invention. A further mode of operation can be imagined if the interstage booster pump is pumping more flow than what is exiting the first stage brine outlet. In this can the additional flow being pumped by the interstage booster pump will be supplied from the second stage brine outlet, thus recirculating the second stage brine back into the second stage inlet. There are numerous other flexible modes of operation that can be achieved by adjusting the flowrates through the process defining machines: The High-Pressure Pump, the Inter Stage Booster Pump, the Turbine and the isobaric pressure exchanger in connection with a high pressure booster pump (preferably realized with the Danfoss iSave pump which offers a combination of isobaric pressure exchanger in connection with a high pressure booster pump). And when these identified machines are being based on positive displacement technology, this enables super accurate flow control regardless of what pressures are present in the two stages, greatly simplifying the operational control.

As a rule of thumb the second stage of the described RO system requires the same energy as the first stage but produces only 50% of permeate (i.e. desalinated water). In other words: By switching off the second stage the system produces approximately 67% of permeate by using approximately 50 % of the energy.

It will be appreciated by the expert skilled in the art that by using this principle the system can be adapted to different energy prices and/or water needs: If electric power prices are low the system may use both stages for freshwater production, while it may switch off the second stage if energy prices are on the rise. Likewise, the system may use both stages when water need is high, whereas it may use the first stage only of water needs go down. Finally, if the desired output is not primarily the production of fresh water, but instead the up-concentration of the final brine outlet, the system can be configured as described above, to recirculate the brine outlet of the second stage back into the feed inlet of the second stage. This will consume more energy as salinity levels will rise in the second stage, the level of concentration of the final brine outlet is increased.

This adaption to different needs is important e..g. in areas where electric power is mainly generated by solar panels: At daytime when solar power supply is high as well as water consumption the RO system may be used with two stages, whereas at night the second stage can be shut down which saves 50% electric energy while maintaining 67 % fresh water production.

It will be further understood by the expert skilled in the art, that the system can not only be switched on or off, it can be regulated over the entire range (0-100% power) in order to optimize the ratio of energy consumption versus water production. For example, the first stage may work with the above described first pressure difference Δp₁ of 60 bar and the second stage may work with the above described second pressure difference Δp₂ of e.g. 20 bar, 30 bar or 40 bar.

Similarly, the system can be adapted to different saline concentrations. In certain areas the groundwater has a fluctuating salt content. When the salt content is higher the osmotic pressure of the solution is higher which in turn requires higher pressure for the reverse osmosis. As the solute concentration of the brine is much higher then of the feed it would require an excessive pressure for the second stage. In such areas the RO system may use only the first stage at times when the feed has a high solute concentration and switch on the second stage when the solute concentration drops.

Another aspect of the present disclosure relates to a method for operating a system for reverse osmosis, RO, according to the present disclosure as described above. Therein, the method of the present disclosure comprises at least the step of changing a pressure between the first brine outlet and the second feed inlet by a first pressure difference Δp₁, preferably via a first means for creating the first pressure difference particularly preferred being one of a hydraulic motor (pressure drop) and a hydraulic pump (pressure rise). Further preferred, the first pressure difference Δp₁ is at least partially or fully affected by said one of hydraulic pump and hydraulic motor. The method further comprises the step of changing a pressure between the second brine outlet and the pressure exchanger by a second pressure difference Δp₂ corresponding to the first pressure difference Δp₁, preferably via a second means for creating the second pressure difference particularly preferred being the another one of the hydraulic motor (pressure drop) and a hydraulic pump (pressure rise). Therein, the second pressure difference Δp₂ preferably is at least partially or fully affected by said other one of hydraulic pump and hydraulic motor. The aforementioned steps are preferably carried out by a control unit controlling the first and second means for creating pressure differences. The method also comprises the step of transferring hydraulic energy from a second brine flow effluent from the second brine outlet to a first feed flow provided to the first feed inlet via the pressure exchanger. This step is preferably carried out via a connection between the first and second means, said connection allowing for direct or indirect transfer of (hydraulic) energy. The method of this disclosure enables such energy transfer with an optimal transfer efficiency.

In a preferred embodiment, the method of the present disclosure is for operating a system further comprising a third RO stage that is interconnected between the first RO stage and the second RO stage and comprises a third feed inlet, a third brine outlet, and a third permeate outlet. In such embodiment wherein an optional further fluid connection is established between the line connecting the second brine outlet with the third hydraulic pump and the line connecting the hydraulic motor and the pressure exchanger PE high pressure inlet. According to this embodiment, the method further comprises the steps of changing a pressure between the first brine outlet and the third feed inlet by a pressure difference Δp_{3,1} and of changing a pressure between the third brine outlet and the second feed inlet by a pressure difference Δp_{3,2}. Therein, the sum of pressure difference Δp_{3,1} and pressure difference Δp_{3,2} amounts to at least the first pressure difference Δp₁. Further, at least one of the pressure difference Δp_{3,1} and pressure difference Δp_{3,2} is affected via one of a of a hydraulic motor and a hydraulic pump, while the second pressure difference Δp₂ is affected via the other one of the hydraulic motor and the hydraulic pump. Further preferred, if one of the pressure difference Δp_{3,1} and pressure difference Δp_{3,2} is affected via one of a of a hydraulic motor and a hydraulic pump, the pressure between the first brine outlet and the second feed inlet is considered to be changed by a first pressure difference Δp₁ (also) via said one of the hydraulic motor and the hydraulic pump. In other words, in such case a first pressure difference Δp₁ can be affected partially by one of a hydraulic motor and a hydraulic pump and partially by other means, e.g. a pressure exchanger. The same holds true for RO systems comprising even further RO stages, such as a fourth RO stage, a fifth RO stage and so forth and thus introducing further pressure differences Δp_{4,1} and Δp_{4,1,} Δp_{5,1} and Δp_{5,1}, and so forth. Also then, some of these pressure differences might be introduces by hydraulic pumps or motors and/or pressure exchangers. In this embodiment, the system preferably comprises a third means for creating the third pressure difference and the control unit is preferably configured to control the first, second, and third means for creating pressure differences to adjust the first, second, and third pressure differences correspondingly to each other.

Further preferred embodiments of the method of the present disclosure correspond to the preferred embodiments of the system of the present disclosure as described above and provided the advantages as described above with respect to the system of the disclosure. Further aspects and preferred embodiments of the invention are disclosed by the dependent claims, the drawings and the following description of the drawings. Different disclosed embodiments are advantageously combined with each other if not explicitly stated otherwise.

### Brief Description of the Drawings

The features of the invention become apparent to those skilled in the art by the detailed description of exemplary embodiments with reference to the attached drawings in which:
- Fig. 1: illustrates schematically a system for RO according to a first embodiment;
- Fig. 2, 2a and 2b: illustrate a system for RO according to a second embodiment;
- Fig. 3: illustrates a system for RO according to a third embodiment;
- Fig. 4: illustrates a system for RO according to a fourth embodiment;
- Fig. 5 and 5a: illustrates a system for RO according to a fifth embodiment;
- Fig. 6: illustrates a system for RO according to a sixth embodiment;
- Fig. 7: illustrates a system for RO according to a seventh embodiment; and
- Fig. 8: illustrates a method for RO according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, may be embodied in various different forms, and should not be construed as being limited to only the illustrated embodiments herein. These embodiments are provided as examples so that this disclosure will be complete and will fully convey the aspects and features of the present invention to those skilled in the art.

Accordingly, elements not considered necessary to those having skill in the art for a complete understanding of the features of the present invention may not be described.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "substantially", "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Figure 1 schematically illustrates a system for reverse osmosis, RO, 100 according to a first embodiment, the system 100 comprising a first RO stage 10 and a second RO stage 20.

The first RO stage 10 comprises a first feed inlet 11, a first brine outlet 12, a first permeate outlet 13 as well as a first high-pressure RO chamber 15 and a first low-pressure RO chamber 16 that are separated by a first RO membrane 14 and, together, form a first RO tank. A first feed flow 17 is fed to the first high-pressure RO chamber 15 via the first RO feed inlet 11 and a first brine flow 19 is discharged via the first brine outlet 12. Further, a first permeate flow 18 is discharged from the first low-pressure RO chamber 16 via a first permeate outlet 13.

The second RO stage 20 comprises a second feed inlet 21, a second brine outlet 22, a second permeate outlet 23 as well as a second high-pressure RO chamber 25 and a second low-pressure RO chamber 26 that are separated by a second RO membrane 24 and, together, form a second RO tank. A second feed flow 27 is fed to the second high-pressure RO chamber 25 via the second RO feed inlet 21 and a second brine flow 29 is discharged via the second brine outlet 22.

A fluid connection (19a) is established between the line connecting the first brine outlet (12) with the second hydraulic pump (60) and the line connecting the hydraulic motor (50) and the pressure exchanger PE (40) high pressure inlet (41). Further, a second permeate flow 28 is discharged from the second low-pressure RO chamber 26 via a second permeate outlet 23. Each of the inlets and outlets may be valve controlled, wherein active valves or passive valves (e.g., check valves) may be used. The system further comprises another source of liquid (not shown) to compensate for permeate taken out of system 100 via permeate outlets 13, 23, i.e., to also add to the first feed flow 17.

The RO system 100 further comprises a pressure exchanger, PE, 40, particularly an isobaric and/or rotary pressure exchanger 40. The pressure exchanger 40 comprises a PE high-pressure inlet 41, a PE HP outlet 42, a HP low-pressure, LP, inlet 43, and a PE LP outlet 44. The PE HP inlet 41 is connected to the second brine outlet 22, i.e., is disposed downstream of the second brine outlet 22, and receives the second brine flow 29 discharged from the second brine outlet 22. The PE HP outlet 42 is connected via a booster pump (51) to the first feed inlet 11, i.e., is disposed upstream of the first feed inlet 11 and provides the first feed flow 17 to the first feed inlet 11. Hence, the PE 40 is connected between the second brine outlet 22 and the first feed inlet 11.

As illustrated in Figure 1, a first pressure difference Δp₁ between the first brine outlet 12 and the second feed inlet 21 corresponds to a second pressure difference Δp₂ between the second brine outlet 22 and the pressure exchanger 40. A pressure at the first brine outlet 12 differs from a pressure at the second feed inlet 21 by the first pressure difference Δp₁. Further, a pressure at the second brine outlet 22 differs from a pressure at the PE HP inlet 41 by the second pressure difference Δp₂. Therein, the first pressure difference Δp₁ is preferably greater than 20 bar, more preferably greater than 35 bar, and also preferably even greater than 50 bar. As the second pressure difference Δp₂ corresponds to the first pressure difference Δp₁, also the second pressure difference Δp₂ preferably exceeds those values. The first pressure difference Δp₁ may be exactly the same as the second pressure difference Δp₂ but at least corresponds to about 80% to 120%, preferably to about 90% to 110%, and particularly preferred to about 95% to 105% of the second pressure difference Δp₂.

Setting the first and second pressure difference Δp₁ and Δp₂ in such corresponding manner provides the advantageous effect that the isobaric pressure exchanger 40 is advantageously operated with optimal energy transfer efficiency. This is achieved as pressure differences, particularly a pressure difference between pressure levels at the PE HP inlet 41 and the PE HP outlet 42 as well as a pressure difference between pressure levels at the PE LP inlet 43 and the PE LP outlet 44 are the same or at least almost the same. By this, optimal pressure conditions and thus transfer efficiency is achieved independent of specific system pressures.

Figure 2 schematically illustrates a system for RO 100 according to a second embodiment, wherein same components are denoted with same reference signs as in the first embodiment and a repeated description of these components is omitted for sake of brevity.

In the system of Figure 2, the first pressure difference Δp₁ is realized by a (second) hydraulic pump 60.2 and the second pressure difference Δp₂ is realized by a hydraulic motor 50. In other words, the first pressure difference Δp₁ corresponds to the pressure rise at the second hydraulic pump 60.2 and the second pressure difference corresponds to the pressure drop at the hydraulic motor 50. In the system of Figure 2, the hydraulic motor 50 and the second hydraulic pump 60.2 are connected to each other via a connection that is configured to allow for energy transfer as it is illustrated in Figure 2 by a dashed line. The energy transfer via that connection may be accomplished hydraulically, mechanically and/or electrically.

The RO system 100 of Figure 2 further differs from the system of Figure 1 in that another (first) hydraulic pump 60.1 is disposed in the first feed flow 17 for pressurizing a part of said feed flow 17. However, a part of said feed flow 17 is split from it upstream the first hydraulic pump 60.1 and provided to the PE LP inlet 43. This part is then pressurized in the isobaric pressure exchanger 40 and provided to the first feed inlet 11 via the PE HP outlet 42. In such manner it can be further advantageously ensured that a volumetric flow into the PE LP inlet 43 matches a volumetric flow into the PE HP inlet 41, which also improves efficiency of PE 40.

In the embodiment of Figure 2, the first RO stage 10 operates at a high-pressure level of about 60 bar and the second RO stage 20 operates at a high-pressure level of about 120 bar. In other words, a pressure at the first feed inlet 11 and the first brine outlet 12 is about 60 bar and a pressure at the second feed inlet 21 and the second brine outlet 22 is about 120 bar. A pressure rise at the second hydraulic pump 60.2 is about 60 bar which corresponds to the pressure drop at the hydraulic motor 50 from which energy is transferred to the second hydraulic pump 60.2. A pressure of the second brine flow 29 is about 120 bar upstream and about 60 bar downstream the hydraulic motor 50 and a pressure at the PE HP inlet 41 is about 60 bar, which is about the same as a pressure at first feed inlet 11 and PE HP outlet 42.

The feed solution may be provided by a feed solution reservoir with a pressure of 2 bar which corresponds to a pressure at the PE LP inlet 43 and to a pressure at a pump inlet of the first hydraulic pump 60.1. A pressure at the PE LP outlet 44 also corresponds to 2 bar and a pressure at a motor outlet of the first hydraulic pump 60.1 is also about 60 bar. Hence, in the system of Figure 2 pressure levels are ensured for operating the pressure exchanger 40 with an optimal transfer efficiency. Further, the hydraulic energy removed from the system 100 via hydraulic motor 50 for ensuring these pressure levels is reintroduced into the system 100 via second hydraulic pump 60.2 in order to increase the pressure for the second RO stage 20.

According to the present invention, the second stage of the RO system may be shut-off by switching off the hydraulic motor 50 and the second hydraulic pump 60.2. In this operation mode the brine from the first brine outlet flows through the fluid connection 19 a to the PE 40 via its inlet 41.

Figure 2a schematically illustrates a system as in Figure 2 in which no mechanical connection between the hydraulic motor 50 and the second hydraulic pump 60.2 does exist which makes control of the system easier. The system may have an electrical connection between the hydraulic motor 50 and the second hydraulic pump 60.2.

Figure 2b schematically illustrates an alternative embodiment system similar to Figure 2 in which the booster pump 51 is located directly before the high pressure inlet 41 of the isobaric pressure exchanger 40.

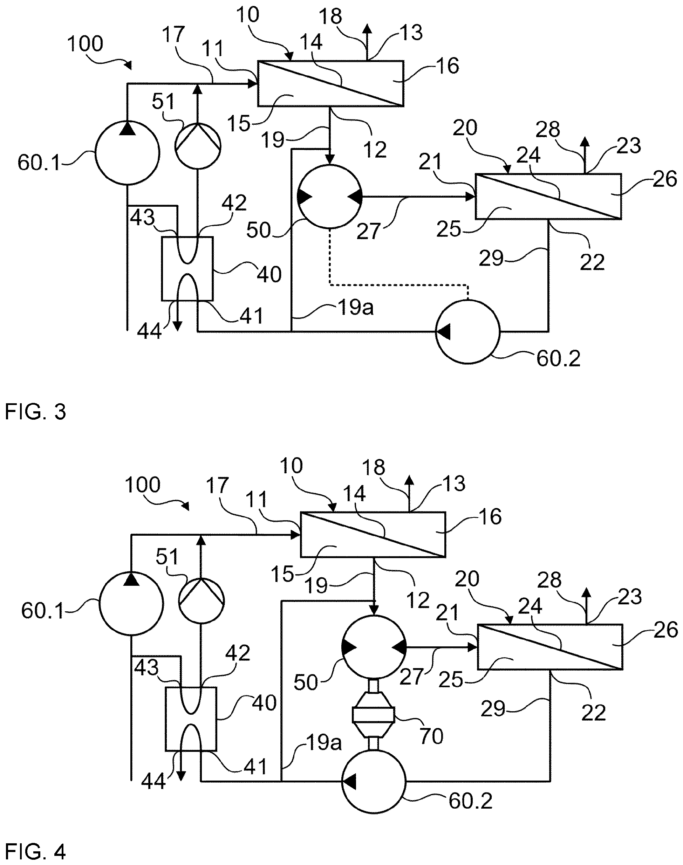

Figure 3 schematically illustrates a system for RO 100 according to a third embodiment. Therein, same components are denoted with same reference signs as in previous embodiments and a repeated description of these components is omitted for sake of brevity.

The system 100 of Figure 3 differs from the system of Figure 2 in that the first RO stage 10 is operated at a high-pressure level of about 120 bar, while the second RO stage 20 is operated at a high-pressure level of about 60 bar. In other words, a pressure at the first feed inlet 11 and the first brine outlet 12 is about 120 bar and a pressure at the second feed inlet 21 and the second brine outlet 22 is about 60 bar. The system of Figure 3 further differs from that of Figure 2 in that hydraulic motor 50 is disposed between the first RO stage 10 and the second RO stage 20, while second hydraulic pump 60.2 is disposed downstream the second brine outlet 22. Hence, in the system 100 of Figure 3 a pressure drop of about 60 bar is introduced between the first brine outlet 12 and the second feed inlet 21 via the hydraulic motor 50 which corresponds to a pressure rise at the second hydraulic pump 60.2 of about 60 bar. Hence, a pressure of the second brine flow 29 is about 60 bar upstream and about 120 bar downstream the second hydraulic pump 60.2 and thus a pressure at the PE HP inlet 41 is about 120 bar, which is about the same as a pressure at the first feed inlet 11 and the PE HP outlet 42.

Again, the feed solution may be provided by a feed solution reservoir with a pressure of 2 bar which corresponds to a pressure at the PE LP inlet 43 and to a pressure at a pump inlet of the first hydraulic pump 60.1. A pressure at the PE LP outlet 44 also corresponds to 2 bar and a pressure at a motor outlet of the first hydraulic pump 60.1 is here about 120 bar. Hence, also in the system of Figure 3 pressure levels are ensured for operating the pressure exchanger 40 with an optimal transfer efficiency and hydraulic energy removed from the system 100 via hydraulic motor 50 is reintroduced into the system 100 via second hydraulic pump 60.2 in order to increase the second brine flow 29 pressure upstream the isobaric pressure exchanger 40.

Similarly to the embodiment described above, the second stage of the RO system may be shut-off by switching off the hydraulic motor 50 and the second hydraulic pump 60.2. In this operation mode the brine from the first brine outlet flows through the fluid connection 19a to the PE 40 via its inlet 41.

Figure 4 schematically illustrates a system for RO 100 according to a fourth embodiment. Therein, same components are denoted with same reference signs as in previous embodiments and a repeated description of these components is omitted for sake of brevity.

The system 100 of Figure 4 differs from that of Figure 3 in that the connection between the hydraulic motor 50 and the second hydraulic pump 60.2 is realized via an induction motor 70. The induction motor 70 may be an asynchronous motor that has a stator and a rotor. The second hydraulic pump 60.2 may be an axial piston pump and the hydraulic motor 50 may be an axial piston motor. The rotor of the induction motor 70 may be mechanically connected to an input shaft of the axial piston pump 60.2 and to an output shaft of the axial piston motor 50. The rotor of the induction motor 70 may be connected to a motor shaft of the induction motor 70 that is connected to the input shaft and the output shaft and wherein this motor shaft may be either a single continuous motor shaft or may be formed by pair of dual (double) motor shafts.

The use of the configuration as of Figure 4 advantageously allows for transferring energy from the hydraulic motor 50 to the second hydraulic pump 60.2 in a particularly efficient manner, i.e., without conversion losses for a conversion from mechanical to electrical energy as it might appear e.g., in a variable frequency drive or the like. Further, the use of induction motor 70 for mechanically connecting the hydraulic motor 50 and the second hydraulic pump 60.2 further advantageously provides ways for efficient control of the system 100, e.g., by adding additional energy being required by second hydraulic pump 60.2 for creating a desired pressure level at the PE HP inlet 41. This may be varied by changing a slip of induction motor 70. Further, at least one of the hydraulic motor 50 and the second hydraulic pump 60.2 comprises a swash plate and/or a mechanical gear to enable an adjustment of a volume and/or revolution ratio between the hydraulic motor 50 and the second hydraulic pump 60.2.

Similarly to the embodiments described above, the second stage of the RO system may be shut-off by switching off the hydraulic motor 50 and the second hydraulic pump 60.2. In this operation mode the brine from the first brine outlet flows through the fluid connection 19a to the PE 40 via its inlet 41.

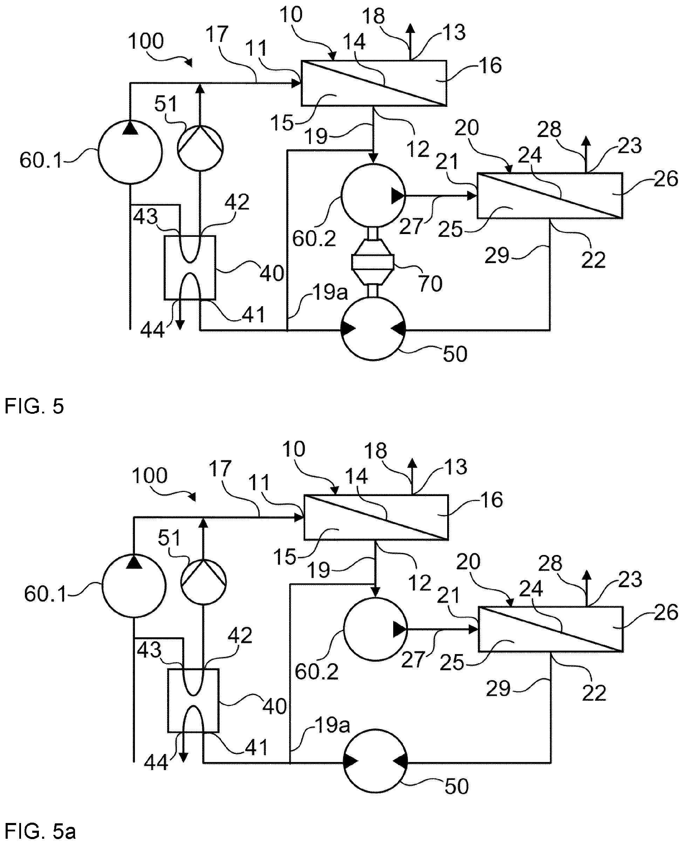

Figure 5 schematically illustrates a system for RO 100 according to a fifth embodiment. Therein, same components are denoted with same reference signs as in previous embodiments and a repeated description of these components is omitted for sake of brevity. The system 100 of Figure 5 has a same configuration of hydraulic motor 50 and second hydraulic pump 60.2 as described with reference to Figure 2 that are connected to each other via induction motor 70, which provides the advantages as described with respect to Figure 4.

Figure 5a schematically illustrates a system for RO 100 according to a fifth embodiment. Therein, same components are denoted with same reference signs as in previous embodiments and a repeated description of these components is omitted for sake of brevity. The system 100 of Figure 5a has a same configuration of hydraulic motor 50 and second hydraulic pump 60.2 as described with reference to Figure 5 without induction motor 70.

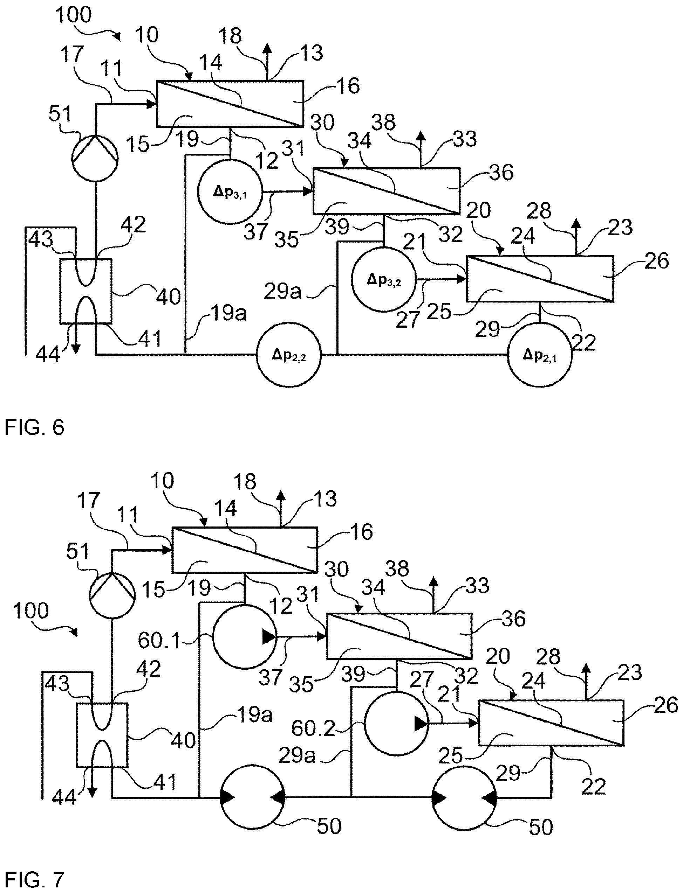

Figure 6 schematically illustrates a system for RO 100 according to a sixth embodiment. Therein, same components are denoted with same reference signs as in previous embodiments and a repeated description of these components is omitted for sake of brevity.

The RO system 100 of Figure 6 further comprises a third RO stage 30 comprising a third feed inlet 31, a third brine outlet 32, a third permeate outlet 33 as well as a third high-pressure RO chamber 35 and a third low-pressure RO chamber 36 that are separated by a third RO membrane 34 and, together, form a third RO tank. A third feed flow 37 is fed to the third high-pressure RO chamber 35 via the third RO feed inlet 31 and a third brine flow 39 is discharged via the third brine outlet 32. Further, a third permeate flow 38 is discharged from the third low-pressure RO chamber 36 via a third permeate outlet 33. The permeate of all three RO stages 10, 20, 30 may be provided commonly or separately to subsequent stages or uses.

In the 3 stage system of Figure 6 a fluid connection 19a is realized as well as an optional second fluid connection 29a, allowing to independently shut-off the second and/or the third stage in the same way as described above, providing the benefits described earlier in this specification.

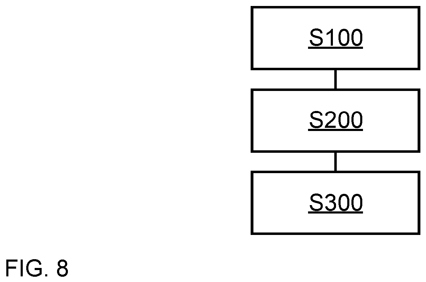

In the system 100 of Figure 6, a first pressure difference Δp₁ between the first RO stage 10 and the second RO stage 20 is constituted by a pressure difference Δp_{3,1} between the first RO stage 10 and the third RO stage 30 and by a pressure difference Δp_{3,2} between the third RO stage 30 and the second RO stage 20. As discussed with respect to the embodiments of Figure 7 and 8 at least one of the pressure differences Δp_{3,1} and Δp_{3,2} is created by one of a hydraulic motor and a hydraulic pump. The system 100 could further comprise additional RO stages between the third RO stage 30 and the second RO stage 20, e.g., a fourth RO stage (not shown) between the third RO stage 30 and the second RO stage 20 and a fifth RO stage (not shown) between the fourth RO stage (not shown) and the second RO stage 20. Then, the pressure difference Δp_{3,2} would be further divided into pressure differences Δp_{4,1} and Δp_{4,2} and the pressure difference Δp_{4,2} would be further divided into pressure differences Δp_{5,1} and Δp_{5,2}, at least some of which are created by one of a hydraulic motor and a hydraulic pump. Again, system 100 comprises another source of liquid (not shown) to compensate for permeate taken out of system 100 via permeate outlets 13, 23, 33, i.e., to also add to the first feed flow 17.

Figure 7 schematically illustrates a system for RO 100 according to a seventh embodiment. Therein, same components are denoted with same reference signs as in previous embodiments and a repeated description of these components is omitted for sake of brevity.

The embodiment of Figure 7 corresponds to that of Figure 6, wherein each of the pressure differences Δp_{3,1} and Δp_{3,2} is created by a hydraulic pump, namely a first hydraulic pump 60.1 and a second hydraulic pump 60.2. Exemplarily, the first RO stage 10 operates at a high-pressure level of 60 bar, the third RO stage 30 operates at a high-pressure level of 90 bar, and the second RO stage 20 operates at a high-pressure level of 120 bar. In other words, a pressure at the first feed inlet 11 and the first brine outlet 12 is about 60 bar, a pressure at the third feed inlet 31 and the third brine outlet 32 is about 90 bar, and a pressure at the second feed inlet 21 and the second brine outlet 22 is about 120 bar. A pressure rise at the first hydraulic pump 60.1 is thus about 30 bar and a pressure rise at the second hydraulic pump 60.2 is also about 30 bar. The sum of these pressure rises, i.e., 60 bar, corresponds to the pressure drop at the hydraulic motor 50. A pressure of the second brine flow 29 is about 120 bar upstream and about 60 bar downstream the hydraulic motor 50 and thus a pressure at the PE HP inlet 41 is about 60 bar, which is about the same as a pressure at the first feed inlet 11 and at the PE HP outlet 42. Again, system 100 comprises another source of liquid (not shown) to compensate for permeate taken out of system 100 via permeate outlets 13, 23, 33, i.e., to also add to the first feed flow 17.

Figure 8 schematically illustrates a block diagram of a method for operating a system for reverse osmosis, RO, 100 as previously described with respect to Figures 1 to 8 according to an embodiment. Therein, the method comprises the step S100 of changing a pressure between the first brine outlet 12 and the second feed inlet 21, preferably via one of a hydraulic motor 50 and a hydraulic pump 60, by a first pressure difference Δp₁. The method further comprises the step S200 of changing a pressure between the second brine outlet 22 and the pressure exchanger 40, preferably via another one of the hydraulic motor 50 and a hydraulic pump 60, by a second pressure difference Δp₂ corresponding to the first pressure difference Δp₁. The method further comprises the step S300 of transferring hydraulic energy from a second brine flow 28 effluent from the second brine outlet 22 to a first feed flow 17 provided to the first feed inlet 11 via the pressure exchanger 40. This method allows for an operation of a multi-stage RO system 100 with at least two RO stages 10, 20 with improved energy efficiency by utilizing hydraulic energy created via a pressure drop at the hydraulic motor 50 to generate a pressure rise at the hydraulic pump 60 and by feeding the pressure exchanger 40 with a flow, the pressure of which is optimized by said pressure drop or said pressure rise for improved transfer efficiency.

### Reference signs

- 10: first RO stage
- 11: first feed inlet
- 12: first brine outlet
- 13: first permeate outlet
- 14: first RO membrane
- 15: first high-pressure RO chamber
- 16: first low-pressure RO chamber
- 17: first feed flow
- 18: first permeate flow
- 19: first brine flow
- 19a: first fluid connection
- 20: second RO stage
- 21: second feed inlet
- 22: second brine outlet
- 23: second permeate outlet
- 24: second RO membrane
- 25: second high-pressure RO chamber
- 26: second low-pressure RO chamber
- 27: second feed flow
- 28: second permeate flow
- 29: second brine flow
- 29a: second fluid connection (optional)
- 30: third RO stage
- 31: third feed inlet
- 32: third brine outlet
- 33: third permeate outlet
- 34: third RO membrane
- 35: third high-pressure RO chamber
- 36: third low-pressure RO chamber
- 37: third feed flow
- 38: third permeate flow
- 39: third brine flow
- 40: (first) (isobaric) pressure exchanger
- 41: (first) PE HP inlet
- 42: (first) PE HP outlet
- 43: (first) PE LP inlet
- 44: (first) PE LP outlet
- 45: (second) (isobaric) pressure exchanger
- 46: (second) PE HP inlet
- 47: (second) PE HP outlet
- 48: (second) PE LP inlet
- 49: (second) PE LP outlet
- 50: hydraulic motor (turbine)
- 51: booster pump
- 60: hydraulic pump
- 70: induction motor
- 100: system for reverse osmosis

## Claims

1. System (100) for reverse osmosis, RO, comprising:
a first RO stage (10) with a first feed inlet (11), a first brine outlet (12), and a first permeate outlet (13);
at least a second RO stage (20) with a second feed inlet (21), a second brine outlet (22), and a second permeate outlet (23);
an isobaric pressure exchanger, PE, (40) connected between the second brine outlet (22) and the first feed inlet (11),
a hydraulic pump (60.2) connected between the first brine outlet (12) and the second feed inlet (21) and a hydraulic motor (50) connected between the second brine outlet (22) and the isobaric pressure exchanger (40),
wherein a booster pump (51) is connected between the high-pressure outlet (42) of the isobaric pressure exchanger (42) and the feed inlet (11) or wherein a booster pump (51) is connected directly before the high-pressure inlet 41 of the isobaric pressure exchange (40)
and
wherein a first fluid connection (19a) is established between the first brine outlet (19) and the line connecting the hydraulic pump (50) and the pressure exchanger PE (40) high pressure inlet (41).

2. System (100) according to claim 1, wherein the isobaric pressure exchanger (40) comprises an PE high pressure, HP, inlet (41) connected to the second brine outlet (22) and an PE HP outlet (42) connected via a booster pump (51) to the first feed inlet (11), wherein the hydraulic motor (50) is connected between the second brine outlet (22) and the PE HP inlet (41).

3. System (100) according to any one of the preceding claims, wherein the isobaric pressure exchanger (40) is a rotary pressure exchanger.

4. System (100) according to claim 2, wherein a hydraulic motor (50) is connected between the second brine outlet (22) and the PE HP inlet (41) and wherein a pressure drop occurring at the hydraulic motor (50) is a second pressure difference Δp₂ that is corresponding to a first pressure difference Δp₁.

5. System (100) according to claim 4, wherein the hydraulic pump (60.2) is configured to cause the first pressure difference Δp₁ such that a pressure at the first brine outlet (12) is smaller than a pressure at the second feed inlet (21).

6. System (100) according to claims 2 to 3, wherein a hydraulic pump (60) is connected between the second brine outlet (22) and the PE HP inlet (41) and wherein the pressure rise occurring at the hydraulic pump (60) is a second pressure difference Δp₂ that is corresponding to a first pressure difference Δp₁.

7. System (100) according to claim 6, wherein the hydraulic motor (50) is configured to cause the first pressure difference Δp₁ such that a pressure at the first brine outlet (12) is larger than a pressure at the second feed inlet (21).

8. System (100) according to claim 4 or 6, wherein one of the hydraulic motor (50), booster pump (51) and the hydraulic pump (60) is configured to cause the first pressure difference Δp₁ such that it is larger than 10 bar, preferably larger than 20 bar, and further preferably larger than 50 bar.

9. System (100) according to claim 4 or 6, wherein the first pressure difference Δp₁ occurring at the one of the hydraulic motor (50) and the hydraulic pump (60) is about 90% to 110% of the second pressure difference Δp₂ occurring at the other one of the hydraulic motor (50) and the hydraulic pump (60), and preferably the first pressure difference Δp₁ is about 95% to 105% of the second pressure difference Δp₂.

10. System (100) according to at least one of the preceding claims, further comprising a third RO stage (30) interconnected between the first RO stage (10) and the second RO stage (20) and having a third feed inlet (31), a third brine outlet (32), and a third permeate outlet (33), wherein one of a another hydraulic motor and another hydraulic pump is connected between the first brine outlet (12) and the third feed inlet (31) and the first pressure difference Δp₁ comprises a pressure difference Δp_{3,1} occurring at the one of the another hydraulic motor and the another hydraulic pump between the first brine outlet (12) and the third feed inlet (31) and wherein the other one of the another hydraulic motor and the another hydraulic pump is connected between the third brine outlet (32) and the second feed inlet (21) and the first pressure difference Δp₁ further comprises a pressure difference Δp_{3,2} occurring at the other one of the another hydraulic motor and the another hydraulic pump between the third brine outlet (32) and the second feed inlet (21); wherein an optional further fluid connection (29a) is established between the line connecting the second brine outlet (39) with the third hydraulic pump (60.2) and the line connecting the hydraulic motor (50) and the pressure exchanger PE (40) high pressure inlet (41).

11. Method of operating a system (10) for reverse osmosis, RO, comprising a first RO stage (10) with a first feed inlet (11), a first brine outlet (12), and a first permeate outlet (13), a second RO stage (20) with a second feed inlet (21), a second brine outlet (22), and a second permeate outlet (23), and an isobaric pressure exchanger (40) connected between the second brine outlet (22) and the first feed inlet (11), a hydraulic pump (60.2) connected between the first brine outlet (12) and the second feed inlet (21) and another hydraulic pump motor (50) connected between the second brine outlet (22) and the isobaric pressure exchanger (40),
a booster pump (51) connected between the high-pressure outlet (42) of the isobaric pressure exchanger (42) and the feed inlet (11) or a booster pump (51) connected directly before the high-pressure inlet 41 of the isobaric pressure exchange (40), a first fluid connection (19a) established between the first brine outlet (19) and the line connecting the hydraulic pump (50) and the pressure exchanger PE (40) high pressure inlet (41)
the method comprising the steps of:
changing (S100) a pressure between the first brine outlet (12) and the second feed inlet (21) by a first pressure difference Δp₁ being one of a pressure rise and a pressure drop via means for creating the first pressure difference Δp₁;
changing (S200) a pressure between the second brine outlet (22) and the isobaric pressure exchanger (40) by a second pressure difference Δp₂ being the other one of a pressure rise and a pressure drop and being about 80% to 120% of the first pressure difference Δp₁ via means for creating the second pressure difference Δp₂; and
transferring (S300) hydraulic energy from a second brine flow (28) effluent from the second brine outlet (22) to a first feed flow (17) provided to the first feed inlet (11) via the isobaric pressure exchanger (40).

12. Method of claim 11 for operating a system (100) further comprising a third RO stage (30) interconnected between the first RO stage (10) and the second RO stage (20) and having a third feed inlet (31), a third brine outlet (32), and a third permeate outlet (33), the method further comprising the steps of:
changing a pressure between the first brine outlet (12) and the third feed inlet (31) by a pressure difference Δp_{3,1};
changing a pressure between the third brine outlet (32) and the second feed inlet (21) by a pressure difference Δp_{3,2};
wherein the sum of pressure difference Δp_{3,1} and pressure difference Δp_{3,2} amounts to at least the first pressure differenceΔp₁, and
wherein at least one of the pressure difference Δp_{3,1} and pressure difference Δp_{3,2} is affected via one of a of a hydraulic motor (50) and a hydraulic pump (60), and the pressure difference Δp₂ is affected by the other one of a hydraulic motor (50) and a hydraulic pump (60).

13. Method of operating a system (10) for reverse osmosis, RO, comprising a first RO stage (10) with a first feed inlet (11), a first brine outlet (12), and a first permeate outlet (13);at least a second RO stage (20) with a second feed inlet (21), a second brine outlet (22), and a second permeate outlet (23);an isobaric pressure exchanger, PE, (40) connected between the second brine outlet (22) and the first feed inlet (11),a hydraulic pump (60) connected between the first brine outlet (12) and the second feed inlet (21) and another hydraulic pump (50) connected between the second brine outlet (22) and the isobaric pressure exchanger (40),wherein a booster pump (51) is connected between the outlet of the isobaric pressure exchanger(42) and the feed inlet (11) and wherein a first fluid connection (19a) is established between the first brine outlet (19) and the line connecting the hydraulic pump (50) and the pressure exchanger PE (40) high pressure inlet (41), the method comprising the steps of:
Controlling the energy consumption of the RO system by controlling the performance of hydraulic motor (50), booster pump (51), hydraulic pump (60.1) and hydraulic pump (60.2).

## Amended claims

### Amended claims in accordance with Rule 137(2) EPC.

1. System (100) for reverse osmosis, RO, comprising:
a first RO stage (10) with a first feed inlet (11), a first brine outlet (12), and a first permeate outlet (13);
at least a second RO stage (20) with a second feed inlet (21), a second brine outlet (22), and a second permeate outlet (23);
an isobaric pressure exchanger, PE, (40) connected between the second brine outlet (22) and the first feed inlet (11),
a hydraulic pump (60.2) connected between the first brine outlet (12) and the second feed inlet (21) and a hydraulic motor (50) connected between the second brine outlet (22) and the isobaric pressure exchanger (40),
wherein a booster pump (51) is connected between the high-pressure outlet (42) of the isobaric pressure exchanger (42) and the feed inlet (11) and
wherein a first fluid connection (19a) is established between the first brine outlet (12) before the hydraulic pump (60.2) and the line connecting the hydraulic motor (50) and the pressure exchanger PE (40) high pressure inlet (41) after the hydraulic motor (50).

2. System (100) for reverse osmosis, RO, comprising:
a first RO stage (10) with a first feed inlet (11), a first brine outlet (12), and a first permeate outlet (13);
at least a second RO stage (20) with a second feed inlet (21), a second brine outlet (22), and a second permeate outlet (23);
an isobaric pressure exchanger, PE, (40) connected between the second brine outlet (22) and the first feed inlet (11),
a hydraulic pump (60.2) connected between the first brine outlet (12) and the second feed inlet (21) and a hydraulic motor (50) connected between the second brine outlet (22) and the isobaric pressure exchanger (40),
wherein a booster pump (51) is connected directly before the high-pressure inlet 41 of the isobaric pressure exchange (40) and
wherein a first fluid connection (19a) is established between the first brine outlet (12) before the hydraulic motor (50) and the line connecting the hydraulic pump (60.2) and the pressure exchanger PE (40) high pressure inlet (41) after the hydraulic pump (60.2).

3. System (100) for reverse osmosis, RO, comprising:
a first RO stage (10) with a first feed inlet (11), a first brine outlet (12), and a first permeate outlet (13);
at least a second RO stage (20) with a second feed inlet (21), a second brine outlet (22), and a second permeate outlet (23);
an isobaric pressure exchanger, PE, (40) connected between the second brine outlet (22) and the first feed inlet (11),
a hydraulic motor (50) connected between the first brine outlet (12) and the second feed inlet (21) and a hydraulic pump (60.2) connected between the second brine outlet (22) and the isobaric pressure exchanger (40),
wherein a booster pump (51) is connected between the high-pressure outlet (42) of the isobaric pressure exchanger (42) and the feed inlet (11)
and
wherein a first fluid connection (19a) is established between the first brine outlet (12) before the hydraulic motor (50) and the line connecting the hydraulic pump (60.2) and the pressure exchanger PE (40) high pressure inlet (41) after the hydraulic pump (60).

4. System (100) according to claim 1 or 2, wherein the isobaric pressure exchanger (40) comprises an PE high pressure, HP, inlet (41) connected to the second brine outlet (22) and an PE HP outlet (42) connected via a booster pump (51) to the first feed inlet (11), wherein the hydraulic motor (50) is connected between the second brine outlet (22) and the PE HP inlet (41).

5. System (100) according to any one of the preceding claims, wherein the isobaric pressure exchanger (40) is a rotary pressure exchanger.

6. System (100) according to claim 5, wherein a hydraulic motor (50) is connected between the second brine outlet (22) and the PE HP inlet (41) and wherein a pressure drop occurring at the hydraulic motor (50) is a second pressure difference Δp₂ that is corresponding to a first pressure difference Δp₁.

7. System (100) according to claim 6, wherein the hydraulic pump (60.2) is configured to cause the first pressure difference Δp₁ such that a pressure at the first brine outlet (12) is smaller than a pressure at the second feed inlet (21).

8. System (100) according to claim 3 , wherein a hydraulic pump (60.2) is connected between the second brine outlet (22) and the PE HP inlet (41) and wherein the pressure rise occurring at the hydraulic pump (60.2) is a second pressure difference Δp₂ that is corresponding to a first pressure difference Δp₁.

9. System (100) according to claim 8, wherein the hydraulic motor (50) is configured to cause the first pressure difference Δp₁ such that a pressure at the first brine outlet (12) is larger than a pressure at the second feed inlet (21).

10. System (100) according to claim 6 or 8, wherein one of the hydraulic motor (50), and the hydraulic pump (60.2) connected between the first brine outlet (12) and the second feed inlet (21) is configured to cause the first pressure difference Δp₁ such that it is larger than 10 bar, preferably larger than 20 bar, and further preferably larger than 50 bar.

11. System (100) according to claim 6 or 8, wherein the first pressure difference Δp₁ occurring at the one of the hydraulic motor (50) and the hydraulic pump (60.2) is about 90% to 110% of the second pressure difference Δp₂ occurring at the other one of the hydraulic motor (50) and the hydraulic pump (60), and preferably the first pressure difference Δp₁ is about 95% to 105% of the second pressure difference Δp₂.

12. System (100) according to at least one of the preceding claims, further comprising a third RO stage (30) interconnected between the first RO stage (10) and the second RO stage (20) and having a third feed inlet (31), a third brine outlet (32), and a third permeate outlet (33), wherein one of a another hydraulic motor (50) and another hydraulic pump (60.2) is connected between the first brine outlet (12) and the third feed inlet (31) and the first pressure difference Δp₁ comprises a pressure difference Δp_{3,1} occurring at the one of the another hydraulic motor (50) and the another hydraulic pump (60.2) between the first brine outlet (12) and the third feed inlet (31) and wherein the other one of the another hydraulic motor (50) and the another hydraulic pump (60.2) is connected between the third brine outlet (32) and the second feed inlet (21) and the first pressure difference Δp₁ further comprises a pressure difference Δp_{3,2} occurring at the other one of the another hydraulic motor (50) and the another hydraulic pump (60.2) between the third brine outlet (32) and the second feed inlet (21);
wherein an optional further fluid connection (29a) is established between the line connecting the second brine outlet (32) before the hydraulic pump (60.2) with the third hydraulic pump (60.2) and the line connecting the hydraulic motor (50) and the pressure exchanger PE (40) high pressure inlet (41) after the hydraulic pump (50)..

13. Method of operating a system (10) for reverse osmosis, RO, comprising a first RO stage (10) with a first feed inlet (11), a first brine outlet (12), and a first permeate outlet (13), a second RO stage (20) with a second feed inlet (21), a second brine outlet (22), and a second permeate outlet (23), and an isobaric pressure exchanger (40) connected between the second brine outlet (22) and the first feed inlet (11), a hydraulic pump (60.2) connected between the first brine outlet (12) and the second feed inlet (21) and another hydraulic pump motor (50) connected between the second brine outlet (22) and the isobaric pressure exchanger (40),
a booster pump (51) connected between the high-pressure outlet (42) of the isobaric pressure exchanger (42) and the feed inlet (11) or a booster pump (51) connected directly before the high-pressure inlet (41) of the isobaric pressure exchange (40), a first fluid connection (19a) established between the first brine outlet (19) and the line connecting the hydraulic pump (50) and the pressure exchanger PE (40) high pressure inlet (41)
the method comprising the steps of:
changing (S100) a pressure between the first brine outlet (12) and the second feed inlet (21) by a first pressure difference Δp₁ being one of a pressure rise and a pressure drop via means for creating the first pressure difference Δp₁;
changing (S200) a pressure between the second brine outlet (22) and the isobaric pressure exchanger (40) by a second pressure difference Δp₂ being the other one of a pressure rise and a pressure drop and being about 80% to 120% of the first pressure difference Δp₁ via means for creating the second pressure difference Δp₂; and
transferring (S300) hydraulic energy from a second brine flow (28) effluent from the second brine outlet (22) to a first feed flow (17) provided to the first feed inlet (11) via the isobaric pressure exchanger (40).

14. Method of claim 13 for operating a system (100) further comprising a third RO stage (30) interconnected between the first RO stage (10) and the second RO stage (20) and having a third feed inlet (31), a third brine outlet (32), and a third permeate outlet (33), the method further comprising the steps of:
changing a pressure between the first brine outlet (12) and the third feed inlet (31) by a pressure difference Δp_{3,1}
changing a pressure between the third brine outlet (32) and the second feed inlet (21) by a pressure difference Δp_{3,2};
wherein the sum of pressure difference Δp_{3,1} and pressure difference Δp_{3,2} amounts to at least the first pressure differenceΔp₁, and
wherein at least one of the pressure difference Δp_{3,1} and pressure difference Δp_{3,2} is affected via one of a of a hydraulic motor (50) and a hydraulic pump (60), and the pressure difference Δp₂ is affected by the other one of a hydraulic motor (50) and a hydraulic pump (60).

15. Method of operating a system (10) for reverse osmosis, RO, comprising a first RO stage (10) with a first feed inlet (11), a first brine outlet (12), and a first permeate outlet (13);at least a second RO stage (20) with a second feed inlet (21), a second brine outlet (22), and a second permeate outlet (23);an isobaric pressure exchanger, PE, (40) connected between the second brine outlet (22) and the first feed inlet (11),a hydraulic pump (60) connected between the first brine outlet (12) and the second feed inlet (21) and another hydraulic pump (50) connected between the second brine outlet (22) and the isobaric pressure exchanger (40),wherein a booster pump (51) is connected between the outlet of the isobaric pressure exchanger(42) and the feed inlet (11) and wherein a first fluid connection (19a) is established between the first brine outlet (19) and the line connecting the hydraulic pump (50) and the pressure exchanger PE (40) high pressure inlet (41), the method comprising the steps of:
Controlling the energy consumption of the RO system by controlling the performance of hydraulic motor (50), booster pump (51), hydraulic pump (60.1) and hydraulic pump (60.2).
